Europäisches Patentamt

European Patent Office

Office européen des brevets

(11) Veröffentlichungsnummer: **0 326 643**
**A2**

## (12) EUROPÄISCHE PATENTANMELDUNG

(21) Anmeldenummer: 88113291.4

(51) Int. Cl.4: **H04B 15/00**

(22) Anmeldetag: 17.08.88

(30) Priorität: 01.02.88 DE 3802863

(43) Veröffentlichungstag der Anmeldung:
09.08.89 Patentblatt 89/32

(84) Benannte Vertragsstaaten:
DE FR GB IT SE

(71) Anmelder: VDO Adolf Schindling AG
Gräfstrasse 103
D-6000 Frankfurt/Main 90(DE)

(72) Erfinder: Kronenberg, Hartmut
Alte Damaschke-Strasse 125
D-6231 Schwalbach/Ts.(DE)
Erfinder: Baur, Ulrich, Dr.
Kurpfalzstrasse 9
D-6945 Hirschberg(DE)

(74) Vertreter: Klein, Thomas, Dipl.-Ing. (FH)
Sodener Strasse 9 Postfach 6140
D-6231 Schwalbach a. Ts.(DE)

(54) Verfahren zum Betrieb einer taktgesteuerten Einrichtung und taktgesteuerte Einrichtung.

(57) Es wird ein Verfahren zum Betrieb einer taktgesteuerten Einrichtung, insbesondere einer Einrichtung mit wenigstens einem Mikrocomputerschaltkreis und/oder integrierten Schaltkreisen sowie eine solche Einrichtung angegeben. Die taktgesteuerte Einrichtung umfaßt im Besonderen eine mikrocomputergesteuerte Anzeige-, Steuer- oder Regelungseinrichtung in einem Kraftfahrzeug, die in engem räumlichen Verbund mit anderen elektronischen Geräten steht. Zur Verminderung der von der taktgesteuerten Einrichtung ausgehenden Störstrahlung wird die Taktfrequenz nach unterschiedlichen Kriterien variiert.

Fig. 1

EP 0 326 643 A2

## Verfahren zum Betrieb einer taktgesteuerten Einrichtung und taktgesteuerte Einrichtung

Die Erfindung betrifft ein Verfahren zum Betrieb einer taktgesteuerten Einrichtung, insbesondere einer Einrichtung mit wenigstens einem Mikrocomputerschaltkreis und/oder integrierten Schaltkreisen, im Besonderen einer mikrocomputergesteuerten Anzeige-, Steuer- oder Regelungseinrichtung in einem Kraftfahrzeug, nach der Gattung des Hauptanspruchs.

Die Erfindung betrifft ferner eine solche taktgesteuerte Einrichtung, insbesondere eine Einrichtung mit wenigstens einem Mikrocomputerschaltkreis und/oder integrierten Schaltkreisen, im Besonderen eine mikrocomputergesteuerte Anzeige-, Steuer- oder Regelungseinrichtung nach der Gattung des Anspruchs 6.

Die zunehmende Verwendung von Einrichtungen, die von Taktgeneratoren mit hohen Taktraten und entsprechend kurzen Flankenanstiegs- und -abfallzeiten gesteuert werden, führt zu einer Zunahme der davon ausgehenden hoch- und höherfrequenten abgestrahlten elektromagnetischen Störfelder. Als Störungsursache kommen dabei nicht nur die von den Taktgeneratoren erzeugten Impulsfolgen fester Frequenzen, sondern auch die im Mikrocomputerschaltkreis verarbeiteten Nachrichten mit Impulsfolgen wechselnder Impulsdichte in Frage. Da die in digital arbeitenden Schaltkreisen verarbeiteten Signale verhältnismäßig steilflankig sind, sind die davon abgeleiteten Schwingungen höherer Ordnung die Ursache für radiofrequente Störungen, die den Rundfunkempfang oder Funkverkehr erschweren oder die Funktion gleichartiger benachbarter Schaltkreise beeinträchtigen.

Kombinationsinstrumente für Kraftfahrzeuge, bei denen verschiedene Anzeigeinstrumente, Anzeigefelder, Kontroll- und Warnleuchten durch eine gemeinsame Sichtscheibe abgedeckt und zusammen mit elektrischen und elektronischen Ausrüstungsteilen und gegebenenfalls Bedienelementen in einem gemeinsamen Gehäuse angeordnet sind, sind seit langem bekannt und werden an Stelle der früher üblichen Einzelinstrumente zur Kontrolle verschiedener Funktionen eines Kraftfahrzeuges eingesetzt. Sie enthalten dazu je nach Ausstattungsgrad den Geschwindigkeitsmesser (Tachometer), Wegstreckenzähler, Drehzahlmesser, Kraftstoffvorratsanzeige, Kühlwassertemperaturanzeige, Zeituhr, Bordrechner, Kontrolleuchten für Öldruck, Generator, Fernlicht, Fahrtrichtungsanzeiger, und anderes mehr, wie z.B. Überwachungs- und Rechnersysteme mit deren Anzeigesystemen und sind im Kraftfahrzeug jeweils im Blickfeld des Fahrers in einem entsprechend geformten Instrumententräger untergebracht, der wiederum an der Karosserie befestigt ist. Die Ansteuerung erfolgt im allgemeinen unter Verwendung von Mikrocomputern oder hochintegrierten, ebenfalls taktgesteuerten anwendungsspezifischen oder standardisierten Schaltkreisen.

Insbesondere bei räumlich gedrängter Anordnung, wie sie infolge der begrenzten Einbaumöglichkeiten im Kraftfahrzeug die Regel ist, ergeben sich fallweise unerwünschte Wechselwirkungen zwischen diesen Anzeigeeinrichtungen im Armaturenbrett und einer in der Nähe angeordneten Antenne eines Rundfunkempfangsgerätes. Besondere Schwierigkeiten bereiten in diesem Zusammenhang sogenannte Scheibenantennen, bei denen ein rahmenförmig auf oder in der Windschutzscheibe angebrachter leitender Belag die Empfangsantenne des Rundfunkempfangsgerätes darstellt. Ähnliche unerwünschte Wechselwirkungen können sich auch mit Steuer- und Regelungseinrichtungen im gesamten Kraftfahrzeug ergeben.

Es ist zwar bereits vorgeschlagen worden, die Auswirkungen dieser von einer taktgesteuerten Anzeige-, Steuer- oder Regelungseinrichtung ausgehenden radiofrequenten Störungen durch ein hochfrequenzdichtes Gehäuse zu bedämpfen, jedoch sind Durchführungsfilter teuer, so daß bei deren Fehlen auch die zahlreichen Verbindungsleitungen zum System noch abstrahlen.

Der Erfindung liegt demgemäß die Aufgabe zugrunde, ein Verfahren zum Betrieb einer taktgesteuerten Einrichtung, insbesondere einer Einrichtung mit wenigstens einem Mikrocomputerschaltkreis und/oder integrierten Schaltkreisen, nach der Gattung des Hauptanspruchs, anzugeben, durch das die von der taktgesteuerten Einrichtung ausgehende Störstrahlung verringert wird.

Die Lösung dieser Aufgabe erfolgt mit den im kennzeichnenden Teil des Hauptanspruchs angegebenen Maßnahmen.

Es ist weiter Aufgabe der Erfindung, eine taktgesteuerte Einrichtung, insbesondere eine Einrichtung mit wenigstens einem Mikrocomputerschaltkreis und/oder integrierten Schaltkreisen nach der Gattung des Anspruchs 6, anzugeben, deren Störstrahlung gegenüber entsprechenden Einrichtungen nach dem Stand der Technik verringert ist.

Vorteilhafte Ausgestaltungen und Weiterbildungen der Erfindung ergeben sich aus den Unteransprüchen.

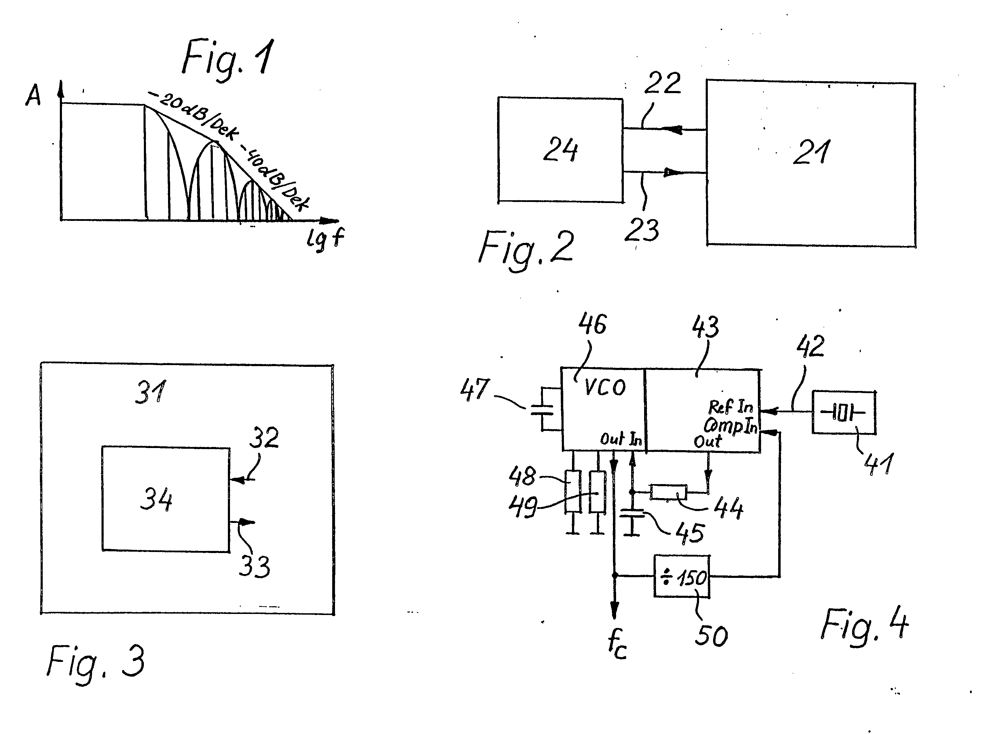

Die Erfindung wird im folgenden unter Zuhilfenahme der Zeichnung beschrieben. Sie geht von der bekannten Tatsache aus, daß bei er Übertragung von Rechtecksignalen mit endlicher Flankensteilheit ein Frequenzspektrum großer Bandbreite entsteht, bei dem eine größere Anzahl Harmonischer mit abnehmender Intensität in periodischem Abstand von der Grundfrequenz auftreten (Fig. 1).

Im Fall einer Mikrocomputersteuerung entstehen diese Oberwellen sowohl bei der Takterzeugung als auch bei der Signalverarbeitung, wobei der Takt als Übertragung einer Punktfolge (kürzeste Zeichenlänge) aufgefaßt werden kann. Die Taktfrequenz solcher Mikrocomputersteuerungen liegt bei konkret ausgeführten Schaltungen zwischen 4 und 10 MHz, die für den Rundfunkempfang belegten Frequenzbänder zwischen 145 und 1620 kHz für Lang- und Mittelwellenempfang, zwischen 5,9 und 18,5 MHz für Kurzwellen-und zwischen 87,5 und 108 MHz für Ultrakurzwellenempfang. Bei der Ansteuerung von mikrocomputergesteuerten Anzeige-, Steuer-und Regelungseinrichtungen oder überhaupt Elektronikeinheiten kann es daher in ungünstigen Fällen zu Beeinträchtigungen des Rundfunkempfangs oder des Funktelefonverkehrs durch die in den Takt- oder Informationssignalen enthaltenen Oberwellen kommen.

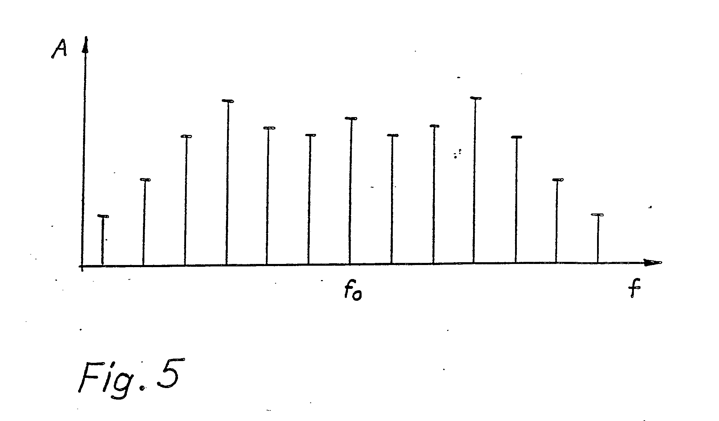

Es ist bekannt, daß bei Modulation einer Trägerschwingung mit einer Modulationsfrequenz sich der Energieinhalt auf eine größere Anzahl Seitenbänden symmetrisch zur Mittenfrequenz f0 verteilt (Fig. 5) und dementsprechend die Amplitude dieser Grundfrequenz sich verringert.

Der Erfindung liegt die Erkenntnis zugrunde, daß die bei der drahtlosen Nachrichtenübertragung unerwünschte Empfangsverschlechterung bei ungenügender Abstimmung eines Empfängers auf die Sende-Mittenfrequenz eines Senders, der in Frequenzmodulation arbeitet, hier unerwartet vorteilhaft zur Beeinflussungsdämpfung einer mikrocomputergesteuerten Einrichtung und eines rundfunktechnischen Gerätes genutzt wird. Zu diesem Zweck erfolgt gemäß einer ersten Ausführungsform die Variation der Taktfrequenz der mikrocomputergesteuerten Einrichtung zwischen wenigstens zwei Werten. Damit wird erreicht, daß ein rundfunktechnisches Gerät, dessen Empfangsfrequenz zufällig im Bereich einer Oberwelle niedriger Ordnungszahl der Taktfrequenz liegt, infolge der Variation erheblich weniger gestört ist, weil die gleichgebliebene Empfangsfrequenz nunmehr mit keiner Oberwelle der geänderten Taktfrequenz oder mit einer Oberwelle höherer Ordnungszahl und daher geringerer Störungsintensität zusammenfällt.

Nach einer ersten Weiterbildung der Erfindung stehen die beiden Taktfrequenzen in keinem ganzzahligen Verhältnis zueinander. So wird erreicht, daß die beiden Frequenzspektren zum großen Teil divergieren und die erwünschte Verbesserung der Empfangsbedingungen möglichst vollkommen eintritt.

Gemäß einer einfachen Ausgestaltung kann die Variation der Taktfrequenz von Hand abhängig vom subjektiven Eindruck der empfangenen Rundfunksendung erfolgen. Im einfachsten Fall wird z.B. der Benutzer eines Rundfunkgerätes in einem Kraftfahrzeug dann die Umschaltung vornehmen, wenn der Sender seiner Wahl stark gestört ist und er annehmen kann, daß die Störung durch einmaliges Umschalten erheblich geringer oder verschwunden ist. Infolge der geänderten Taktrate werden dann zwar die Zeitfunktionen der mikrocomputergesteuerten Einrichtung verändert, jedoch kann dies durch gleichzeitigen Wechsel des Rechenprogramms ausgeglichen werden. Außerdem sind zahlreiche Programme bekannt und denkbar, in denen die Zeitfunktion nur eine untergeordnete Rolle spielt und daher die geänderte Zeitbasis vernachlässigt werden kann. Auch ist denkbar, für diese Zeitfunktionen einen getrennten Taktgeber vorzusehen, der nur intern wirkt und daher wirksamer abgeschirmt und/oder bedämpft werden kann.

In Weiterbildung des Erfindungsgedankens erfolgt die Variation der Taktfrequenz zwischen mehr als zwei Werten zeitabhängig selbsttätig. Bei einem Vorrat von n Frequenzen und geeigneter Stufung besteht die Wahrscheinlichkeit einer extremen Störung nur während 1/n der Gesamtzeit. Gemittelt ergibt dieser Wert eine erhebliche Verringerung des Störeinflusses aus der mikrocomputergesteuerten Einrichtung.

Schließlich wird die Taktfrequenz der mikrocomputergesteuerten Einrichtung in Fortsetzung des Erfindungsgedankens mit einer Modulationsfrequenz moduliert. Zur Vermeidung von Kreuzmodulationsprodukten im hörbaren Bereich des Frequenzspektrums wird die Modulationsfrequenz im Bereich oberhalb 15 kHz, vorteilhaft bei 30 kHz, gewählt. Der Frequenzhub beträgt dabei 15 bis 1500 kHz, vorzugsweise 300 kHz. Bei großem Frequenzhub ergibt sich der Vorteil, daß die automatische Scharfabstimmung einer elektronischen Einrichtung, z.B. eines UKW-Rundfunkempfängers, nicht mehr in der Lage ist, das Störspektrum als Radiosender zu identifizieren. und darauf abzugleichen. Sie hält es vielmehr für breitbandiges Hintergrundrauschen. Auch rastet dann eine Suchlaufautomatik auf der Störmittenfrequenz nicht ein.

Ausführungsbeispiele der Erfindung sind in der Zeichnung in den Fig. 2 bis 5 dargestellt und in der nachfolgenden Beschreibung näher erläutert. Es zeigen Fig. 2 schematisch eine taktgesteuerte Einrichtung mit getrennt angeordnetem Taktgeber, Fig. 3 ebenfalls schematisch eine taktgesteuerte Einrichtung mit eingebautem Taktgeber, Fig. 4 als Blockschaltbild eine Taktgeberschaltung zur Modulation des Taktfrequenz, Fig. 5 das Frequenzspektrum einer frequenzmodulierten Schwingung.

In Figur 2 ist die elektronische Schaltung, welche unter Verwendung eines Mikrocomputers, integrierter Bausteine oder auch diskreter Bauelemente aufgebaut ist, über Leitungsverbindungen 22, 23 mit dem externen Taktgeber 24 verbunden. Der Taktgeber 24 moduliert die für den Betrieb der elektronischen Schaltung 21 erforderliche Taktfrequenz, beispielsweise fc = 4,9152 MHz mit einer Dreieck- oder Sinusspannung, deren Frequenz zwischen 15 und 900 kHz liegt.

In Fig. 3 ist eine elektronische Schaltung 31 dargestellt, welche ebenfalls unter Verwendung wenigstens eines Mikrocomputers, integrierter Schaltkreise und/oder diskreter Bauelemente aufgebaut ist. Die elektronische Schaltung 31 enthält einen Taktgeber 34, dessen Eingangsleitung 32 und dessen Ausgangsleitung 33 unmittelbar von der Leiterplatte der elektronischen Schaltung 31 ausgehen. Bei einer derartigen Anordnung besteht der Vorteil, daß die Leitungen, welche die Taktfrequenz führen, kurz sind und innerhalb des die elektronische Schaltung 31 umschließenden Gehäuses bleiben, so daß Abschirmmaßnahmen besonders erfolgversprechend durchführbar sind.

In Fig. 4 ist ein Ausführungsbeispiel einer PLL-Schaltung zur Erzeugung einer quarzgenauen modulierten Taktfrequenz dargestellt. Ein Quarzoszillator 41 mit einer Frequenz von beispielsweise 32,768 kHz oder mit einer höheren Frequenz, die intern auf diese Ausgangsfrequenz heruntergeteilt ist, speist über die Leitung 42 einen Phasenkomparator 43. Der Ausgang des Phasenkomparators 43 ist über ein aus dem Widerstand 44 und dem Kondensator 45 bestehendes Tiefpaßfilter mit dem Eingang eines spannungsgesteuerten Oszillators 46 verbunden. Der spannungsgesteuerte Oszillator 46 ist durch die äußere Beschaltung mit dem Kondensator 47 und den Widerständen 48, 49 auf eine untere Frequenz von wenigstens einem MHz getrimmt. Der Ausgang des spannungsgesteuerten Oszillators 46 führt die zur Taktversorgung einer taktgesteuerten Einrichtung erforderliche Taktfrequenz fc von beispielsweise 4,9152 MHz. Vom Ausgang des spannungsgesteuerten Oszillators 46 führt über einen Teiler 50 mit dem Teilerverhältnis von 1:150 eine Verbindung zu dem Komparatoreingang des Phasenkomparators 43.

Beim Betrieb der Schaltungsanordnung nach Fig. 4 stellt sich am Ausgang des Phasenkomparators 43 eine gleichspannungsüberlagerte Dreieckspannung mit einer Frequenz von 32,768 kHz an. Dabei läßt sich durch Wahl der Komponenten des Tiefpaßfilters, nämlich des Widerstandes 44 und/oder des Kondensators 45 die Glättung und damit der verbleibende Hub einstellen. Je größer das Produkt R X C, um so besser die Glättung und um so kleiner der Hub.
Die Modulation kann auch durch entsprechende Programmierung im Mikrocomputer selbst oder mittels der integrierten Schaltkreise erfolgen. Sie kann zwischen den wenigstens zwei Frequenzwerten durch unterschiedliche Modulationsspannungen realisiert werden. Die Modulationsspannung kann sinusförmig, dreieckförmig oder nach fest oder variabel vorgegebenen Kurvenformen gebildet sein.

Auf die Genauigkeit der so ausgebildeten Anzeige-, Steuer- und Regeleinrichtungen hat die Modulation der Taktfrequenz keinen nachteiligen Einfluß, da die Taktfrequenz im Mittel quarzgenau bleibt. Durch Mittelung einer genügend großen Anzahl von Informationswerten bleibt auch das Ergebnis genau. Selbst reine Zeitfunktionen, wie z.B. die Zeitanzeige bleiben im interessierenden Zeitraum inbeeinflußt.

## Ansprüche

1. Verfahren zum Betrieb einer taktgesteuerten Einrichtung, insbesondere einer mikrocomputergesteuerten Einrichtung mit wenigstens einem Mikrocomputerschaltkreis und/oder integrierten Schaltkreisen, im Besonderen einer mikrocomputergesteuerten Anzeige-, Steuer- oder Regelungseinrichtung in einem Kraftfahrzeug, die in engem räumlichen Verbund mit anderen elektronischen Geräten, insbesondere im Kraftfahrzeug, steht, dadurch gekennzeichnet, daß die Taktfrequenz des Mikrocomputers zwischen wenigstens zwei Werten in der Frequenz verändert wird.

2. Verfahren nach Anspruch 1, dadurch gekennzeichnet, daß die Veränderung der Frequenz von Hand erfolgt.

3. Verfahren nach Anspruch 1oder 2 , dadurch gekennzeichnet, daß die wenigstens zwei Frequenzwerte in einem nicht-ganzzahligen Verhältnis zueinander stehen.

4. Verfahren nach Anspruch 1, dadurch gekennzeichnet, daß die Veriation der Taktfrequenz zeitabhängig selbsttätig erfolgt.

5. Verfahren nach Anspruch 1, dadurch gekennzeichnet, daß die Taktfrequenz mit einer Modulationsfrequenz moduliert wird.

6. Taktgesteuerte Einrichtung, insbesondere Einrichtung mit wenigstens einem Mikrocompterschaltkreis und/oder integrierten Schaltkreisen, im Besonderen mikrocomptergesteuerte Anzeige-, Steuer- oder Regelungseinrichtung in einem Kraftfahrzeug, die in engem räumlichen Verbund mit anderen elektronischen Geräten, insbesondere im Kraftfahrzeug steht, gekennzeichnet durch eine Taktgeberschaltung, durch die die Taktfrequenz des Mikrocomputers moduliert ist.

7. Taktgesteuerte Einrichtung nach Anspruch 6, dadurch gekennzeichnet, daß die Modulationsfrequenz oberhalb 15 kHz liegt.

8. Taktgesteuerte Einrichtung nach Anspruch 6, dadurch gekennzeichnet, daß die Modulationsfrequenz 32,768 kHz beträgt.

9. Taktgesteuerte Einrichtung nach einem der Ansprüche 6 bis 8, dadurch gekennzeichnet, daß der Frequenzhub der Modulation gleich oder größer ist als die Modulationsfrequenz.

10. Taktgesteuerte Einrichtung nach Anspruch 9, dadurch gekennzeichnet, daß der Frequenzhub 15 bis 1500 kHz beträgt.

11. Taktgesteuerte Einrichtung nach Anspruch 10, dadurch gekennzeichnet, daß der Frequenzhub 300 kHz beträgt.

12. Taktgesteuerte Einrichtung nach einem der Ansprüche 6 bis 11, gekennzeichnet durch eine PLL-Schaltung aus einem Phasencomparator (43) dem von einem Oszillator (41) ein quarzgenaues Taktsignal zugeführt ist und dessen Ausgang mit dem Eingang eines spannungsgesteuerten Oszillators (46) über einen Tiefpaß (44,45) verbunden ist und durch eine Teilerschaltung (50) in der Verbindung des Ausgangs des spannungsgesteuerten Oszillators (46) mit dem Vergleichseingang des Phasencomparators (43).

Fig. 1

Fig. 2

Fig. 3

Fig. 4

EP 0 326 643 A2

Fig.5